# EUROPEAN PATENT APPLICATION

(11) **EP 2 778 482 A1**
(43) Date of publication of application: **17.09.2014**
(21) Application number: 14158549.7
(22) Date of filing: 10.03.2014
(51) Int. Cl.: F16J 15/32, F16J 9/20, F16J 9/00, F16J 15/44, F04B 53/14

(54) **Piston seal and method of reducing frictional forces of a piston seal**

(30) Priority: 15.03.2013 US 201313834731
(71) Applicant: Hamilton Sundstrand Corporation, Windsor Locks, CT 06096-1010 (US)
(72) Inventor: Labrie, Jason Scott, Southampton, MA Massachusetts 01073 (US); Schroder, Bruce R., Agawam, MA Massachusetts 01001 (US); Pess, Matthew L., West Hartford, CT Connecticut 06119 (US)
(74) Representative: Hull, James Edward

(57) **Abstract**

A piston seal (28) includes an inner surface (32) configured to extend proximate a perimeter of a piston (16) and an outer surface (40) disposed proximate a chamber wall (12), wherein the chamber wall (12) defines a chamber (14) for the piston (16) and the piston seal (28) to translate within. The piston seal (28) also comprises a first axial side (36) exposed to a first pressure portion (22) of the chamber (14), a second axial side (38) exposed to a second pressure portion (24) of the chamber (14) and at least one pressure differential reducing hole (42) extending radially through the piston seal (28) from the inner surface (32) to the outer surface (40).

## Description

### BACKGROUND OF THE INVENTION

The present invention relates to pneumatic actuators, and more particularly to a low friction piston seal for pneumatic actuators, as well as a method of reducing frictional forces of the low friction piston seal.

Pneumatic actuators have one or more pressure chambers that contain fluids, such as air, for example, at various pressures. The pressure in the chamber(s) generates forces on a piston and the forces cause the piston to move until the sum of all the forces on the piston equals zero. Piston seals are used to seal a designed gap present between an outer surface of the piston and a piston chamber wall. The piston seal prevents fluid disposed at a higher pressure on one side of the piston from flowing into fluid disposed at a lower pressure on the other side of the piston. The high pressure fluid forces the piston seal outward against the chamber wall, thereby providing the sealing function. The magnitude of the force that biases the piston seal against the chamber wall is dependent on the area that the pressure is applied on and the difference between the high and low pressure. This outward force results in friction as the piston strokes. The friction forces may vary drastically and cause difficulty in controlling the valve.

### BRIEF DESCRIPTION OF THE INVENTION

According to one aspect of the present invention, a piston seal includes an inner surface configured to extend proximate a perimeter of a piston. Also included is an outer surface disposed proximate a chamber wall, wherein the chamber wall defines a chamber for the piston and the piston seal to translate within. Further included is a first axial side exposed to a first pressure portion of the chamber. Yet further included is a second axial side exposed to a second pressure portion of the chamber. Also included is at least one pressure differential reducing hole extending radially through the piston seal from the inner surface to the outer surface.

The present invention extends to a pneumatic actuator system comprising the piston seal described herein and as claimed in any of claims 1 to 11, and an aircraft comprising such a pneumatic actuator system. The pneumatic actuator system may further comprise a chamber wall and a piston.

According to another aspect of the present invention, a method of reducing frictional forces of a piston seal is provided. The method includes exposing a first axial side of the piston seal to a first pressure portion of a chamber. The method also includes exposing a second axial side of the piston seal to a second pressure portion of the chamber. The method further includes reducing a pressure differential between an inner surface and an outer surface of the piston seal by fluidly coupling the inner surface and the outer surface with at least one pressure differential reducing hole extending radially through the piston seal.

### BRIEF DESCRIPTION OF THE DRAWINGS

The subject matter which is regarded as the invention is particularly pointed out and distinctly claimed in the claims at the conclusion of the specification. The foregoing and other features and advantages of the invention are apparent from the following detailed description taken in conjunction with the accompanying drawings in which:
FIG. 1 is a cross-sectional view of a piston assembly;
FIG. 2 is a perspective view of a piston seal of the piston assembly;
FIG. 3 is a cross-sectional view of the piston seal taken along line 3-3 illustrating a pressure differential reducing hole; and
FIG. 4 is a flow diagram illustrating a method of reducing frictional forces of the piston seal.

### DETAILED DESCRIPTION OF THE INVENTION

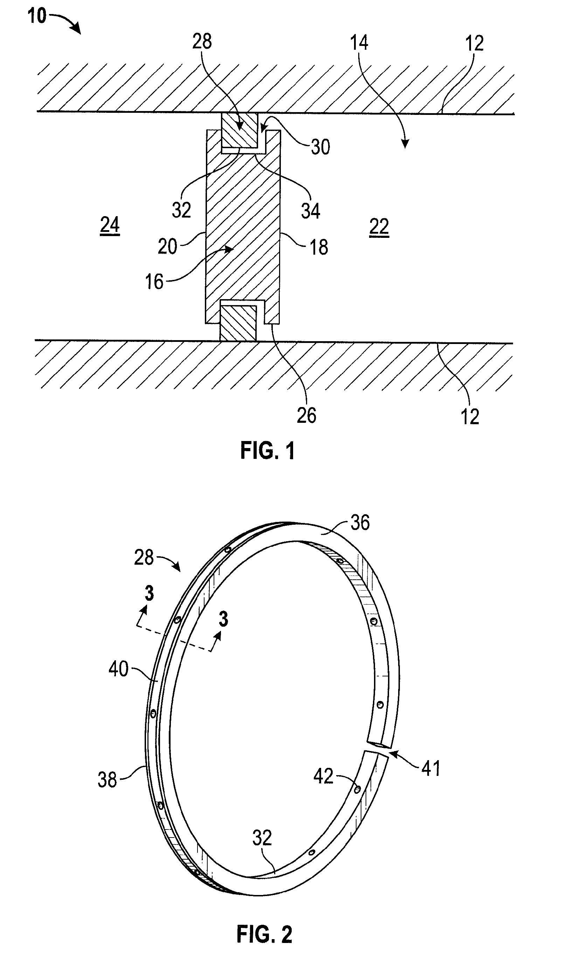

Referring to FIGS. 1 and 2, a pneumatic actuator system 10 is generally illustrated. The pneumatic actuator system 10 may be employed in numerous contemplated applications, with one example being a bleed valve system of an aircraft. The pneumatic actuator system 10 includes a chamber wall 12 that at least partially defines a chamber 14 for a piston 16 to translate within. The piston 16 may be formed in numerous geometries. In the illustrated embodiment, the piston 16 is a cylindrical structure. Irrespective of the precise geometry, it is to be understood that the shape of the piston 16 substantially corresponds to the shape of the chamber 14. The piston 16 is employed to separate and control portions of the chamber 14. As one can appreciate, the pneumatic actuator system 10, and more particularly the chamber 14, may include a plurality of pistons for defining more than two chamber portions.

In the exemplary embodiment, the piston 16 includes a first side 18 and a second side 20. The first side 18 is exposed to a first pressure portion 22 of the chamber 14 and the second side 20 is exposed to a second pressure portion 24 of the chamber 14. The pressures within each of the first pressure portion 22 and the second pressure portion 24 are distinct, with one pressure being higher than the other. For purposes of explanation, the first pressure portion 22 is at a higher pressure than the second pressure portion 24.

The piston 16 is dimensioned to provide a gap between a piston outer surface 26 and the chamber wall 12 to account for tolerances and positional variance issues associated with manufacturing, thereby ensuring translation of the piston 16 within the chamber 14. A piston seal 28 is included to seal the above-noted gap. The piston seal 28 is formed to correspond to the geometry of the piston 16. In the illustrated embodiment, the piston seal 28 is a substantially circular ring that corresponds to the substantially circular piston. Of course, other shapes are possible. The piston seal 28 may comprise a single, continuous structure that completely surrounds the piston outer surface 26, or may comprise a plurality of segments that are spaced around the piston outer surface 26. As illustrated in FIG. 2, a break 41 is provided to define an embodiment comprising a plurality of segments. The break facilitates expansion or contraction of the piston seal 28, as required during operation of the pneumatic actuator system 10. Alternatively, the piston seal 28 may include breaks to segment the overall structure, but overlap of the segments is provided to reduce leakage during operation. Irrespective of the precise configuration, the piston seal 28 is disposed within an annular groove 30 that extends proximate the piston outer surface 26. Specifically, an inner surface 32 of the piston seal 28 is disposed in close proximity with an annular groove base wall 34.

The piston seal 28 comprises a first axial side 36 that is exposed to the first pressure portion 22 of the chamber 14 and a second axial side 38 that is exposed to the second pressure portion 24 of the chamber 14. Additionally, the piston seal 28 includes an outer surface 40 that is disposed in close proximity to the chamber wall 12. A slight gap is disposed between the outer surface 40 and the chamber wall 12, as is the case with the interface between the inner surface 32 and the annular groove base wall 34. The high pressure fluid imposes a force on the inner surface 32 and biases the piston seal 28 radially outwardly into contact with the chamber wall 12, thereby causing friction as the piston 16 translates within the chamber 14. The pressure differential between the first pressure portion 22 and the second pressure portion 24 also introduces a pressure force on the outer surface 40, with the pressure profile along the outer surface 40 comprising a pressure gradient. The pressure gradient includes lower pressures proximate the second axial side 38 that is exposed to the second pressure portion 24, relative to portions of the outer surface 40 that are proximate the first pressure portion 22. The pressure gradient results in a pressure differential between the inner surface 32 and the outer surface 40.

At least one, but typically a plurality of pressure differential reducing holes 42 extends radially within the piston seal 28 from the inner surface 32 to the outer surface 40. The plurality of pressure differential reducing holes 42 are circumferentially spaced from each other around the piston seal 28.

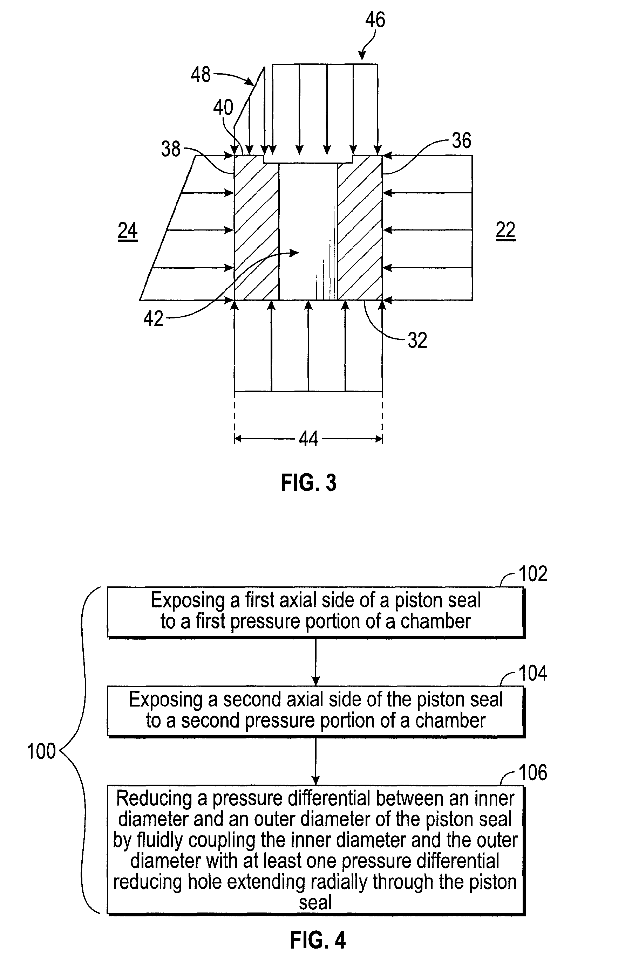

Referring to FIG. 3, a force diagram is illustrated with respect to a cross-sectional portion of a segment of the piston seal 28. Specifically, the segment illustrates one of the plurality of pressure differential reducing holes 42. As shown, the first pressure portion 22 of the chamber 14 is disposed along the first axial side 36, while the second pressure portion 24 of the chamber is disposed along the second axial side 38. The high pressure fluid effects the radial location of the piston seal 28 by interacting with the inner surface 32 and the outer surface 40. The plurality of pressure differential reducing holes 42 allow fluid coupling, or communication, between the inner surface 32 and the outer surface 40, such that the forces acting on these surfaces are more balanced, relative to a piston seal 28 without such holes. As illustrated, the plurality of pressure differential reducing holes 42 facilitates a majority of an axial width 44 of the outer surface 40 of the piston seal 28 having a substantially uniform pressure distribution 46, with only a relatively small portion of the outer surface 40 experiencing a pressure gradient 48.

Advantageously, the plurality of pressure differential reducing holes 42 reduces frictional forces exerted on the piston seal 28 which provides benefits associated with stability and control. Additionally, a more reliable and predictable displacement model may be established by decreasing hysteresis in the actuator and valve system(s) that the piston is associated with.

A method of reducing frictional forces of a piston seal 100 is also provided, as illustrated in FIG. 4 and with reference to FIGS. 1-3. The pneumatic actuator system 10 and more specifically the piston seal 28 have been previously described and specific structural components need not be described in further detail. The method of reducing frictional forces of a piston seal 100 includes exposing 102 the first axial side 36 of the piston seal 28 to the first pressure portion 22 of the chamber 14. The second axial side 38 of the piston seal 28 is exposed 104 to the second pressure portion 24 of the chamber 14. The method 100 also includes reducing 106 a pressure differential between the inner surface 32 and the outer surface 40 by fluidly coupling the inner surface 32 and the outer surface 40 with at least one, but typically the plurality of pressure differential reducing holes 42.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A piston seal (28) comprising:
an inner surface (32) configured to extend proximate a perimeter of a piston (16);
an outer surface (40) disposed proximate a chamber wall (12), wherein the chamber wall (12) defines a chamber (14) for the piston (16) and the piston seal (28) to translate within;
a first axial side (18) exposed to a first pressure portion (22) of the chamber (14);
a second axial side (20) exposed to a second pressure portion (24) of the chamber (14); and
at least one pressure differential reducing hole (42) extending radially through the piston seal (28) from the inner surface (32) to the outer surface (40).

2. The piston seal (28) of claim 1, further comprising an axial width (44) defined by the first axial side (18) and the second axial side (20).

3. The piston seal (28) of claim 2, wherein a relatively uniform pressure distribution is disposed along a majority of the axial width (44).

4. The piston seal (28) of any of claims 1 to 3, wherein the at least one pressure differential reducing hole (42) comprises a plurality of pressure differential reducing holes (42) circumferentially spaced from each other along the piston seal (28).

5. The piston seal (28) of any preceding claim, wherein the inner surface (32) of the piston seal (28) is disposed within a seal groove (30) of the piston (16).

6. The piston seal (28) of any preceding claim, wherein the first pressure portion (22) comprises a first pressure therein and the second pressure portion (24) comprises a second pressure therein, and wherein the first pressure is greater than the second pressure.

7. The piston seal (28) of any preceding claim, wherein the piston seal (28) is disposed on an aircraft.

8. The piston seal (28) of any preceding claim, wherein the piston seal (28) is disposed in a pneumatic actuator system (10).

9. The piston seal (28) of any of claims 1 to 7, wherein the piston seal (28) is disposed in a bleed valve system.

10. The piston seal (28) of any preceding claim, wherein the piston (16) is substantially circular.

11. The piston seal (28) of claim 10, wherein the piston seal (28) is substantially a ring structure having an inner diameter corresponding substantially to a piston outer diameter.

12. A method of reducing frictional forces of a piston seal (28)comprising:
exposing a first axial side (36) of the piston seal (28) to a first pressure portion (22) of a chamber (14);
exposing a second axial side (38) of the piston seal (28) to a second pressure portion (24) of the chamber (14); and
reducing a pressure differential between an inner surface (32) and an outer surface (40) of the piston seal (28) by fluidly coupling the inner surface (32) and the outer surface (40) with at least one pressure differential reducing hole (42) extending radially through the piston seal (28).

13. The method of claim 12, further comprising imposing a substantially uniform pressure distribution along a majority of an axial width (44) of the piston seal (28).

14. The method of claim 13, wherein imposing the substantially uniform pressure distribution comprises reducing a portion of the axial width (44) subjected to a pressure gradient.

15. The method of any of claims 12 to 14, wherein reducing the pressure differential between the inner surface (32) and the outer surface (40) comprises fluidly coupling the inner surface (32) and the outer surface (40) with a plurality of pressure differential reducing holes (42).
